# EUROPEAN PATENT SPECIFICATION

(11) **EP 0 508 789 B1**
(45) Date of publication and mention of the grant of the patent: **21.08.1996**
(21) Application number: 92303182.7
(22) Date of filing: 09.04.1992
(51) Int. Cl.: F16H 57/12, F16H 55/24

(54) **Double-acting type dynamic back spacing removed driving system**
Antrieb mit doppelt wirkender dynamischer Spielunterdrückung
Entraînement avec rattrapage de jeu dynamique bidirectionnel

(30) Priority: 09.04.1991 GB 9107452
(43) Date of publication of application: 14.10.1992
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(56) References cited:
- CH-A- 68 874
- US-A- 3 350 952
- US-A- 3 490 305
- US-A- 4 989 472
- PATENT ABSTRACTS OF JAPAN vol. 9, no. 229 (M-413)(1952) 14 September 1985 & JP-A-60 084 474 (MITSUBISHI DENKI) 13 May 1985

## Description

The present invention relates to a bi-directional transmission for removing backlash.

Swiss Patent Number 68874 in the name of Maag discloses a transmission in which two threaded worms are used to drive a body such as worm gear. One worm is turned to drive the body while the other worm is linked to the first worm via a friction coupling so as to remove backlash from the system.

The present invention is a bi-directional transmission for removing backlash during operation comprising: a back-lash free body, a first prime body, a second prime body coupled to the first prime body and a drive source, each prime body, being engagable with the back-lash free body, wherein the first prime body is a drive prime body for driving the back-lash free body in a forward direction; the second prime body is a displacement- controlling prime body for controlling the displacement of the back-lash free body in the forward direction when the drive prime body applies a forward drive force to the back-lash free body the second prime body restrains forward motion of the back-lash free body to remove backlash until the second prime body is moved to release the back-lash free body so as to engage the second prime body, whereby displacement of the back-lash free body is controlled by movement of the second prime body without the presence of backlash when the driving speed of the first prime body is driven at a greater speed than the driving speed of the second prime body,
characterised in that by the transmission further comprises,
a first gear mounted on the first prime body by a torsion limiting device,
a second gear mounted on the second prime body by a one-way transmission and engaged with the first gear,
a third gear mounted on the second prime body by a torsion limiting device and engaged with the first gear, and
a fourth gear mounted on the first prime body by a one-way transmission and engaged with the third gear,
in that rotation of the first gear in a one direction applies a drive force to the first prime body and moves the second prime body via the second gear to permit controlled displacement of the back-lash free body and in that rotation of the first gear in the opposite direction applies a force to the second prime body via the third gear and moves the first prime body through the fourth gear to permit controlled displacement of the back-lash free body in the opposite direction.

The invention is now described by example only with respect to the accompanying drawing in which

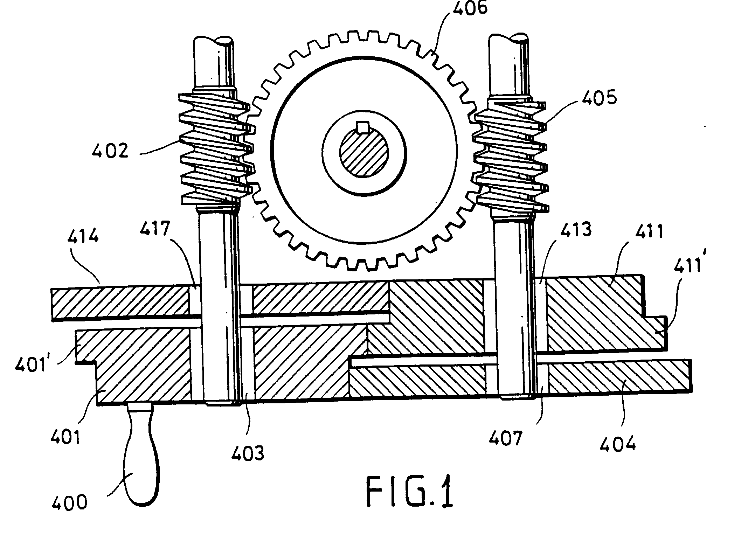

FIG. 1 shows an embodiment of the bi-directional transmission according to the present invention.

Figure 1 shows a bi-directional transmission for removing backlash during operation including a driven backlash-free body 406, a first prime body 402 and a second prime body 405. In operation, one of the prime bodies applies a drive force to the backlash-free body 406, and the other prime body controls the displacement of the backlash-free body 406 by moving more slowly than the driving prime body and acting against the movement of the body 406. The displacement controlling prime body acts to remove backlash between the backlash-free body 406 and each of the prime bodies. When the direction of drive is changed, the displacement controlling prime body becomes the driving prime body, and the driving prime body becomes the displacement prime body so that no backlash occurs upon change-over. The new displacement-controlling prime body moves more slowly than the driving prime body so as to act against the movement of the backlash-free body 406.

A first gear 401, 401' having a handle 400 (or other drive source including a coupling for mechanical power drive), coupled to the first prime body 402 by a torsion limiting device 403 which permits angular displacement of the first gear 401, 401' about the first prime body 402. The transmission also includes a second gear 404 which is a speed reduction gear coupled with the first gear 401 for reduced speed driving of the second gear 404 in the opposite direction to the first gear 401. The second gear 404 is carried by the second prime body 405 through a one-way transmission 407 for driving the second prime body 405 at reduced speed in one direction, and free-wheeling against the second prime body 405 at reduced speed in the other direction. When driving the second prime body 405, the second gear 404 holds back the backlash-free body against the first prime body 402 so as to remove backlash. Driving force is applied to the backlash-free body by the first prime body 402, and the torsion limiting device prevents the gears from locking up whilst the second gear 404 reduces the speed of the second prime body to control displacement of the backlash-free body 406.

The second prime body 405 also carries a third gear 411, 411' through a torsion limiting device 413, and the first prime body carries a fourth gear 414 which is a speed reduction gear. The fourth gear 414 is carried on the first prime body 402 via a one-wat transmission 417. The fourth gear is coupled with the third gear 411, and the third gear 411' is coupled to the first gear 401'. The fourth gear 414 is driven at reduced speed relative to the third gear 411, 411' and in the opposite direction to the third gear. When the third gear 411, 411' is driven in one direction, driving torque is applied to the backlash-free body 406 by the second prime body and the fourth gear 414 is driven by the third gear 411 against the one-way transmission so as to turn the first prime body 402 to control displacement of the backlash-free body 406. The torsion limiting device permits slippage between the second prime body 405 and the third gear 411. When the third gear 411, 411' is driven in the opposite direction, the fourth gear free-wheels around first prime body such that the first prime body is not driven to permit displacement of the backlash-free body 406.

When the handle 400 is turned in a first direction, the first prime body acts on the backlash-free body 406 to apply a drive force to it. The first gear 401 drives the second gear 404 which turns the second prime body 405 through the one-way transmission for reduced speed rotation. The second prime body 405 controls displacement of the backlash-free body 406, and the first gear 401 slips around the first prime body so as to prevent backlash. The one-way transmission 417 between the first prime body 402 and the fourth gear 414 freewheels. When the handle is turned in the other direction, the second gear 404 freewheels around the second prime body 405 so that the second prime body 405 is driven by the third gear 411,411'. The second prime body applies a drive force to the backlash free body so that change of direction of drive does not cause backlash. The backlash-free body is thus bi-directionally driven. The torsion limiting device 403, 413 may be a solenoid type or mechanical type device and the gears may be selected according to the application, such as umbrella gears, straight gears, or the other gearing devices subject to the type of structure of the application. The gears may include intermediate wheel sets where required.

The relationship between the driving speed BS of the driving prime body and the displacement speed CS of the displacement-controlling prime body is BS > CS.

In this embodiment, the backlash-free body is a gear, and the prime bodies are threaded worms which together constitute a worm gear drive.

Typical drive means include step motors, servo motors, general purpose D.C. motors and the like.

In another embodiment, the backlash-free body is a block or nut including two parallel threaded holes for engagement of threaded screws which constitute the prime bodies.

In another embodiment the backlash-free body may be a gear rack.

This transmission may include a displacement detecting device and a position detecting device to increase convenience.

To conclude the above-said description, the transmission removes backlash when stationary and when moving by use of speed reduction whilst capable of bi-directional operation.

## Claims

1. A bi-directional transmission for removing backlash during operation comprising:
a back-lash free body (406), a first prime body (402), a second prime body (405) coupled to the first prime body, and a drive source (400),
each prime body (402,405) being engagable with the back-lash free body, wherein the first prime body is a drive prime body for driving the back-lash free body in a forward direction; the second prime body is a displacement-controlling prime body for controlling the displacement of the back-lash free body in the forward direction when the drive prime body applies a forward drive force to the back-lash free body, the second prime body restrains forward motion of the back-lash free body to remove back-lash until the second prime body is moved to release the back-lash free body so as to engage the second prime body, whereby displacement of the backlash-free body is controlled by movement of the second prime body without the presence of backlash when the driving speed (BS) of the first prime body is driven at a greater speed than the driving speed (CS) of the second prime body,
characterised in that the transmission further comprises
- a first gear (401,401') mounted on the first prime body (402) by a torsion limiting device (403),
- a second gear (404) mounted on the second prime body (405) by a one-way transmission (407) and engaged with the first gear,
- a third gear (411,411') mounted on the second prime body by a torsion limiting device (413) and engaged with the first gear, and
- a fourth gear (414) mounted on the first prime body by a one-way transmission (417) and engaged with the third gear,
- in that rotation of the first gear in a one direction applies a drive force to the first prime body and moves the second prime body via the second gear to permit controlled displacement of the back-lash free body, and
- in that rotation of the first gear in the opposite direction applies a force to the second prime body via the third gear and moves the first prime body through the fourth gear to permit controlled displacement of the back-lash free body in the opposite direction.

2. A transmission according to claim 1, characterised in that the back-lash free body (406) is a drivable rotary member.

3. A transmission according to claim 2, characterised in that the first and second prime bodies (402 and 405) and the drivable rotary member (406) constitute a worm gear drive.

4. A transmission according to claim 1, characterised in that the back-lash free body (406) is a nut (203).

5. A transmission according to any preceding claim, characterised in that the drive source (400) is a motor.

6. A transmission according to any of claims 1 to 4, characterised in that the transmission is manually drivable.

7. A transmission according to any of claims 1, 5 and 6 modified in that the gears are driven by friction belts on friction wheels.

8. A transmission according to any preceding claim, characterised in that the second gear (404) and the fourth gear (414) are speed reduction gears.

## Patentansprüche

1. Bidirektionale Kraftübertragungsvorrichtung zur Spielunterdrückung während des Betriebs, aufweisend:
einen spielfreien Freikörper (406), einen ersten Hauptkörper (402), einen an den ersten Hauptkörper gekoppelten zweiten Hauptkörper (405) und einer Antriebsquelle (400),
wobei jeder Hauptkörper (402/405) in den spielfreien Freikörper eingekuppelt werden kann, wobei der erste Hauptkörper einen Antriebshauptkörper zum Antrieb des spielfreien Freikörpers in einer Vorwärtsrichtung darstellt und wobei der zweite Hauptkörper als verstellungssteuernder Hauptkörper zur Steuerung der Verstellung des spielfreien Freikörpers in der Vorwärtsrichtung dient, wenn der antreibende Hauptkörper eine vorwärts gerichtete Kraft auf den spielfreien Freikörper leitet; der zweite Hauptkörper unterdrückt die Vorwärtsbewegung des spielfreien Freikörpers zur Eliminierung des Spiels so lange bis der zweite Hauptkörper zur Freigabe des spielfreien Freikörpers bewegt wird, um beim zweiten Hauptkörper einzukuppeln, wodurch die Verstellung des spielfreien Freikörpers durch die Bewegung des zweiten Hauptkörpers spielfrei gesteuert wird, wenn die Antriebsgeschwindigkeit BS für den ersten Hauptkörper höher ist als die Antriebsgeschwindigkeit CS des zweiten Hauptkörpers,
dadurch gekennzeichnet, daß die Kraftübertragungsvorrichtung des weiteren aufweist:
- ein erstes Zahnrad (401/401'), welches mittels einer Torsionsbegrenzungseinrichtung (403) am ersten Hauptkörper (402) montiert ist,
- ein zweites Zahnrad (404), welches mittels einer Ein-Wege-Kraftübertragungsvorrichtung (407) am zweiten Hauptkörper (405) montiert ist und in das erste Zahnrad eingreift,
- ein drittes Zahnrad (411/411'), welches mittels einer Torsionsbegrenzungseinrichtung am zweiten Hauptkörper (413) montiert ist und in das erste Zahnrad eingreift, und
- ein viertes Zahnrad (414), welches mittels einer Ein-Wege-Kraftübertragungsvorrichtung (417) am ersten Hauptkörper montiert ist und in das dritte Zahnrad eingreift,
- wobei bei der Drehung des ersten Zahnrades in die eine Richtung eine Antriebskraft auf den ersten Hauptkörper ausgeübt wird und über das zweite Zahnrad der zweite Hauptkörper bewegt wird, um eine gesteuerte Verstellung des spielfreien Freikörpers zu ermöglichen, und
- wobei bei der Drehung des ersten Zahnrades in die entgegengesetzte Richtung über das dritte Zahnrad eine Antriebskraft auf den zweiten Hauptkörper ausgeübt wird und über das vierte Zahnrad der erste Hauptkörper bewegt wird, um eine gesteuerte Verstellung des spielfreien Freikörpers in die entgegengesetzte Richtung zu ermöglichen.

2. Kraftübertragungsvorrichtung gemäß Anspruch 1, dadurch gekennzeichnet, daß der spielfreie Freikörper (406) ein antreibbares Drehteil ist.

3. Kraftübertragungsvorrichtung gemäß Anspruch 2, dadurch gekennzeichnet, daß der erste und zweite Hauptkörper (402 und 405) und das antreibbare Drehteil (406) zusammen einen Schneckenantrieb bilden.

4. Kraftübertragungsvorrichtung gemäß Anspruch 1, dadurch gekennzeichnet, daß der spielfreie Freikörper (406) eine Mutter (203) ist.

5. Kraftübertragungsvorrichtung gemäß aller vorangestellten Ansprüche, dadurch gekennzeichnet, daß die Antriebsquelle (400) ein Motor ist.

6. Kraftübertragungsvorrichtung gemäß den Ansprüchen 1 bis 4, dadurch gekennzeichnet, daß die Kraftübertragungsvorrichtung manuell antreibbar ist.

7. Kraftübertragungsvorrichtung gemäß den Ansprüchen 1, 5 und 6, dadurch modifiziert, daß die Zahnräder von Reibriemen auf Reibrädern angetrieben werden.

8. Kraftübertragungsvorrichtung gemäß allen vorangestellten Ansprüchen, dadurch gekennzeichnet, daß das zweite Zahnrad (404) und das vierte Zahnrad (414) Geschwindigkeitsreduzierungszahnräder sind.

## Revendications

1. Transmission bidirectionnelle à rattrapage de jeu en cours de fonctionnement comprenant :
un élément sans jeu (406) , un premier élément principal (402), un second élément principal (405) accouplé au premier élément principal, et une source d'entraînement (400),
chaque élément principal (402, 405) étant apte à venir en prise avec l'élément sans jeu, dans laquelle le premier élément principal est un élément principal d'entraînement pour entraîner l'élément sans jeu avant, le second élément principal est un élément principal de commande de déplacement pour commander le déplacement de l'élément sans jeu en avant quand l'élément principal d'entraînement applique une force d'entraînement en avant à l'élément sans jeu, le second élément principal empêche le mouvement en avant de l'élément sans jeu pour éliminer le jeu jusqu'à ce que le second élément principal soit déplacé pour libérer l'élément sans jeu afin qu'il vienne en prise avec le second élément principal, grâce à quoi le déplacement de l'élément sans jeu est commandé par un mouvement du second élément principal sans la présence de jeu quand la vitesse d'entraînement (BS) du premier élément principal entraîné est supérieure à la vitesse d'entraînement (CS) du second élément principal,
caractérisé en ce que la transmission comprend encore :
- un premier pignon (401, 401') monté sur le premier élément principal (402) au moyen d'un dispositif limiteur de torsion (403),
- un second pignon (404) monté sur le second élément principal (405) au moyen d'une transmission monodirectionnelle (407) et en prise avec le premier pignon,
- un troisième pignon (411, 411') monté sur le second élément principal par un dispositif limiteur de torsion (413) et en prise avec le premier pignon, et
- un quatrième pignon (414) monté sur le premier élément principal au moyen d'une transmission monodirectionnelle (417) et en prise avec le troisième pignon,
- en ce que la rotation du premier pignon dans un premier sens applique une force d'entraînement au premier élément principal et déplace le second élément principal au moyen du second pignon pour permettre un déplacement commandé de l'élément sans jeu, et
- en ce que la rotation du premier pignon dans le sens opposé applique une force au second élément principal par l'intermédiaire du troisième pignon et déplace le premier élément principal au moyen du quatrième pignon pour permettre un déplacement commandé de l'élément sans jeu dans le sens opposé.

2. Transmission selon la revendication 1, caractérisée en ce que l'élément sans jeu (406) est un élément rotatif susceptible d'être entraîné.

3. Transmission selon la revendication 2, caractérisée en ce que le premier et le second éléments principaux (402, 405) constituent avec l'élément rotatif susceptible d'être entraîné (406) un entraînement à vis sans fin.

4. Transmission selon la revendication 1, caractérisée en ce que l'élément sans jeu (406) est un écrou (203).

5. Transmission selon l'une quelconque des revendications précédentes, caractérisée en ce que la source d'entraînement (400) est à moteur.

6. Transmission selon l'une quelconque des revendications 1 à 4, caractérisée en ce que la transmission peut être entraînée manuellement.

7. Transmission selon l'une quelconque des revendications 1, 5 et 6 modifiée en ce que les pignons sont entraînés par des courroies à friction sur des poulies à friction.

8. Transmission selon l'une quelconque des revendications précédentes, caractérisée en ce que le second pignon (404) et le quatrième pignon (414) sont des pignons réducteurs de vitesse.
